Europäisches Patentamt

European Patent Office

Office européen des brevets

(19)

(11) EP 0 840 294 A2

(12) EUROPEAN PATENT APPLICATION

(43) Date of publication:
06.05.1998 Bulletin 1998/19

(51) Int Cl.⁶: $G11B \ 7/00$

(21) Application number: 97308533.5

(22) Date of filing: 27.10.1997

(84) Designated Contracting States:
AT BE CH DE DK ES FI FR GB GR IE IT LI LU MC NL PT SE
Designated Extension States:
AL LT LV RO SI

(30) Priority: 29.10.1996 KR 9649777

(71) Applicant: Samsung Electronics Co., Ltd.
Suwon City, Kyungki-do (KR)

(72) Inventors:
• Park, Soo-han
  Suwon-city, Kyungki-do (KR)
• Jung, Won-seok
  Bundang-gu, Seongnam-city, Kyungki-do (KR)
• Won, Jong-hwa
  Yongin-city, Kyungki-do (KR)

(74) Representative: Chugg, David John et al
Appleyard Lees,
15 Clare Road
Halifax, West Yorkshire HX1 2HY (GB)

(54) Multiple track scanning method for optical pickup

(57) A method for scanning multiple tracks uses an optical pickup to simultaneously emit a plurality of beams on a plurality of tracks on a disk, and satisfies the equations: $N_j=(N_b-1)N_g-1$ and $N_r=N_bN_g-1$. Here, $N_j$ represents the number of jumped tracks, $N_b$ represents the number of light beams, $N_g$ represents the interval between the light beams, and $N_r$ represents the number of reproduced tracks during a reproduction period.

FIG. 4

EP 0 840 294 A2

**Description**

The present invention relates to a method for scanning multiple tracks using an optical pickup using multiple optical spots, and more particularly, to a method for scanning multiple tracks using an optical pickup enabling high speed scanning without an increase in the rotational speed of a spindle motor by optimizing the interval between light spots and the number of track jump.

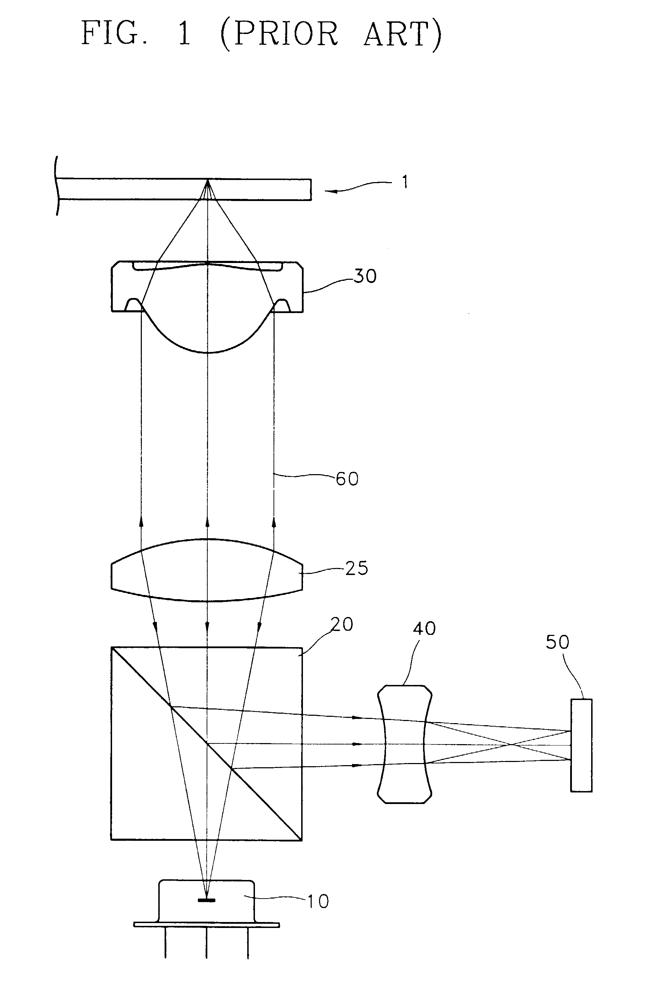

Referring to Figure 1 showing the configuration of a typical optical pickup device, a beam emitted from a light source 10 passes through a beam splitter 20, is converted into a parallel beam by a collimating lens 25 and is converged on a recording surface of a disk 1 by an object lens 30. Also, the beam reflected from the disk 1 proceeds toward a photodetector 50 by the beam splitter 20 and the photodetector 50 detects an RF (radio-frequency) information signal and an error signal from the reflected beam. Reference numeral 40 represents an astigmatism lens.

In the above optical pickup device, recording and reproduction of information are performed as a single beam emitted from the light source 10 follows a track spirally formed on a recording surface of the disk 1. When such an optical pickup device is adopted in a high speed multimedia sub system of a high speed, e.g., beyond 8X, a spindle motor which enables rapid control of the RPM (revolutions per minutes) is required to increase a high data transfer rate. Also, in the case that the high speed data transfer is embodied by increasing the RPM of the spindle motor, correction of an RF response characteristic in an actuator (not shown) of the optical pickup and conversion of a frequency characteristic of a servo circuit and an RF amplifying circuit are required.

Also, when a disk is driven at a CAV (constant linear velocity), the rotation speed of the disk must change rapidly while an optical pickup is moved radially across the disk. Accordingly, torque increases and much heat is generated. Such heat affects each element of the optical pickup, causing a deterioration in the signal.

In consideration of the above problems, an optical pickup device is developed, which adopts a light source emitting multiple beams simultaneously to a plurality of tracks to thereby scan multiple tracks of a disk at once. Namely, N light spots emitted simultaneously from the light source in one disk rotation read information recorded on N tracks.

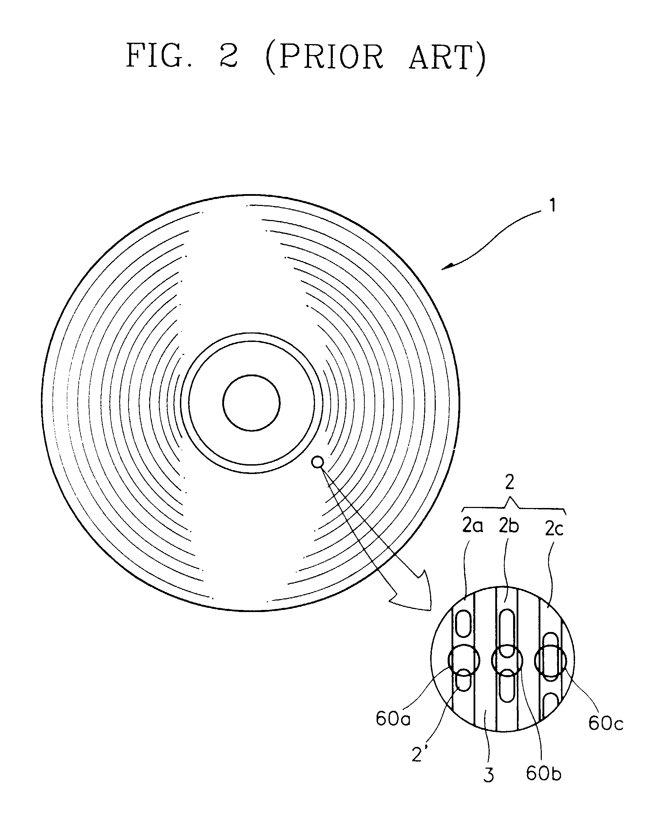

Figure 2 shows a disk 1 and an enlarged portion thereof in which three beams concurrently emitted from a light source (not shown) form respective spots on the disk 1. Referring to the drawing, a track 2 is formed spirally from the center of the disk 1 toward the outer circumference thereof. A groove 3 is formed between tracks 2 and pits 2' corresponding to a recorded information signal is formed on the track 2.

In an optical pickup capable of multiple tracks scanning, a high speed is hardly expected when the optical pickup is driven without consideration of the number of beams, the interval between beams and a track jump to prevent double reproduction of a track. For instance, when first, second and third light spots 60a, 60b, and 60c emitted from the light source are first formed on first, second and third tracks 2a, 2b and 2c of the disk 1, respectively, the first light spot 60a, the second light spot 60b and the third light spot 60c are moved to the second track 2b, the third track 2c and a fourth track (not shown) as the disk 1 rotates one time. Thus, the light spots are focused on the second and third tracks 2b and 2c repeatedly so that the efficiency in data reproduction is lowered.

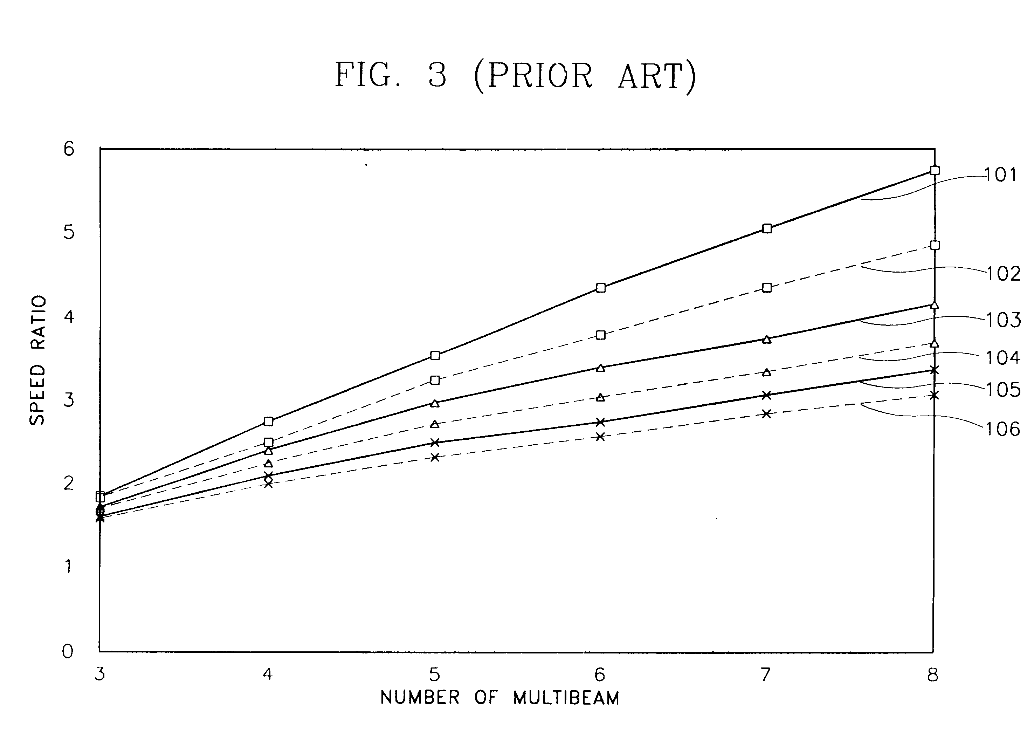

Figure 3 shows a graph indicating the relative speed ratio according to the number of multiple beams in performing multiple tracks scanning of a disk. Here, lines 101 through 106 respectively represent the relative speed ratio according to the number of multiple beams for each of spindle motors of 2X, 4X, 6X, 8X, 10X and 12X speeds. As indicated in the drawing, when 3 beams are employed, the speed ratios of the 2X through 12X spindle motors improve by approximately twofold. Also, when there are 8 beams, the speed ratio of the 2X spindle motor (see line 101) becomes about 6 times faster and the speed ratio becomes about 2.5 times faster with respect to the 12X spindle motor (see line 106).

As mentioned above, in the conventional multiple track scanning method, since information on a portion of tracks is repeatedly reproduced every rotation of the disk, the speed ratio does not increase linearly with an increase in the number of the multiple beams.

With a view to overcome or reduce the above problems, it is an aim of embodiments of the present invention to provide a method for scanning multiple tracks using an optical pickup which enables a higher speed ratio by adopting jump track and multiple beams to minimize the time required for reproducing one track of a disk.

According to an aspect of the invention, there is provided a method for scanning multiple tracks using an optical pickup to simultaneously emit a plurality of beams on a plurality of tracks on a disk, wherein the multiple tracks scanning method satisfies the following equations:

$$N_j = (N_b - 1)N_g - 1$$

and

$$N_r = N_b N_g - 1,$$

wherein $N_j$ represents the number of jumped tracks, $N_b$ represents the number of light beams, $N_g$ represents the interval between the light beams, and $N_r$ represents the number of reproduced tracks during a reproduction period.

It is preferred in the present invention that the method satisfies the following equation:

$$T_1 = T_j(N_b N_g - N_g - 1)/N_r + N_d T_c/N_r$$

wherein $T_l$ represents the time required for reproducing one track, $T_j$ represents the time required for a track jump of the optical pickup, $T_c$ represents the time required for one rotation of the disk, and $N_d$ represents the number of disk rotation during the reproduction period.

For a better understanding of the invention, and to show how embodiments of the same may be carried into effect, reference will now be made, by way of example, to the accompanying diagrammatic drawings, in which:

Figure 1 is a diagram showing an optical arrangement for a typical optical pickup device;

Figure 2 is a plan view illustrating a disk and an enlarged portion of the disk on which three light spots are formed;

Figure 3 is a graph for showing the speed ratio according to the number of multiple beams in the conventional method for scanning multiple tracks using an optical pickup;

Figures 4 through 6 are views schematically illustrating a disk for explaining a method for scanning multiple tracks using an optical pickup according to a preferred embodiment of the present invention;

Figures 7 through 11 are views schematically illustrating a disk for explaining a method for scanning multiple tracks using an optical pickup according to another preferred embodiment of the present invention; and

Figure 12 is a graph for showing the speed ratio according to intervals between light spots in the present multiple tracks scanning method.

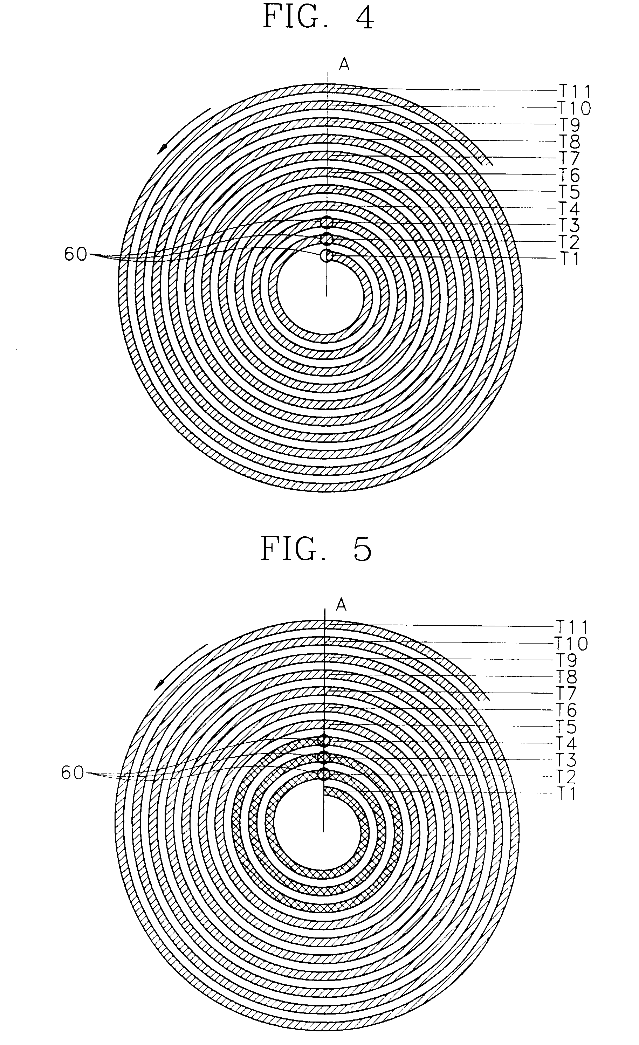

In Figures 4 through 6, a disk is illustrated for the explanation of a multiple tracks scanning method using an optical pickup according to a preferred embodiment of the present invention, in which the hatched section represents tracks T1-T11 where information is recorded.

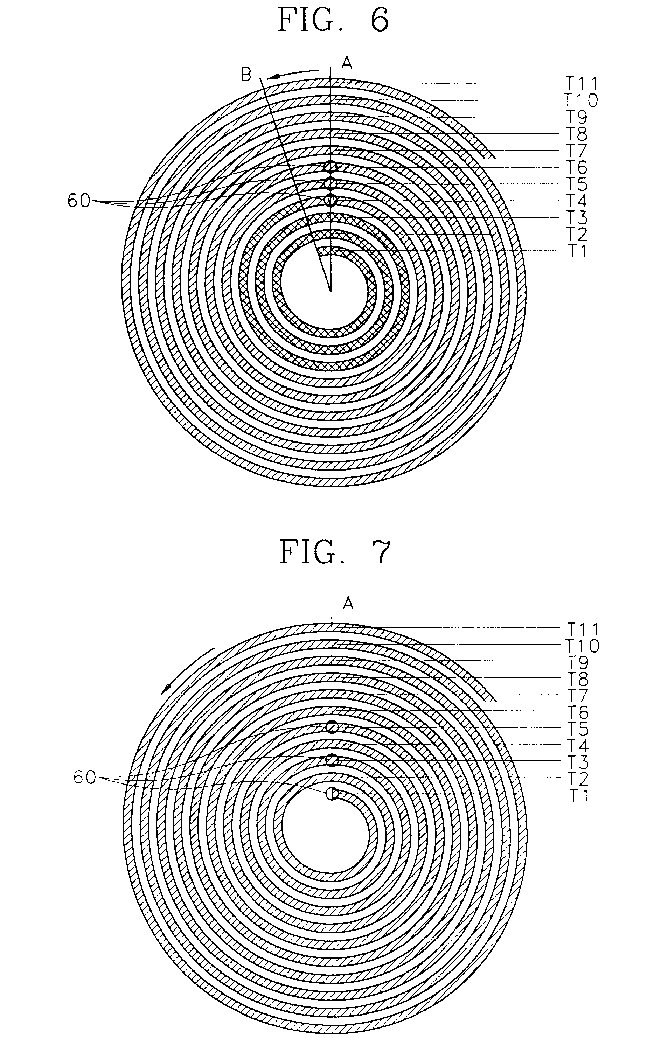

As shown in Figure 4, three light spots 60 initially emitted from a light source (not shown) are formed in series on the first, the second and the third tracks T1, T2 and T3 of the disk along line A. That is, the distance between the light spots is defined as "1" in the present embodiment, which means that the distance between the light spots is the same as the distance between the tracks. As the disk rotates in a direction of an arrow, i.e., counterclockwise, making a rotation, the optical pickup scans the first, second and third tracks T1, T2 and T3 to reproduce the recorded information. Then, as shown in Figure 5, the light spots 60 are respectively located on the second, the third and the fourth tracks T2, T3 and T4 along line A. In the drawing, double hatched section represents the portion of the track scanned by the optical pickup. In this state, as shown in Figure 6, the optical pickup jumps a track so that the three spots 60 are moved to the third, fourth and fifth tracks T3, T4 and T5. Here, the disk rotates further from line A to line B while the track jump of the optical pickup 60 is being made. Thus, a section between the line A and line B on the fourth track T4 remains unscanned. Then, as the disk rotates, tracks are scanned. That is, the third track T3 and a portion of the fourth track T4 are double scanned and the unscanned section of the fourth track T4 is then scanned. The above processes are repeated.

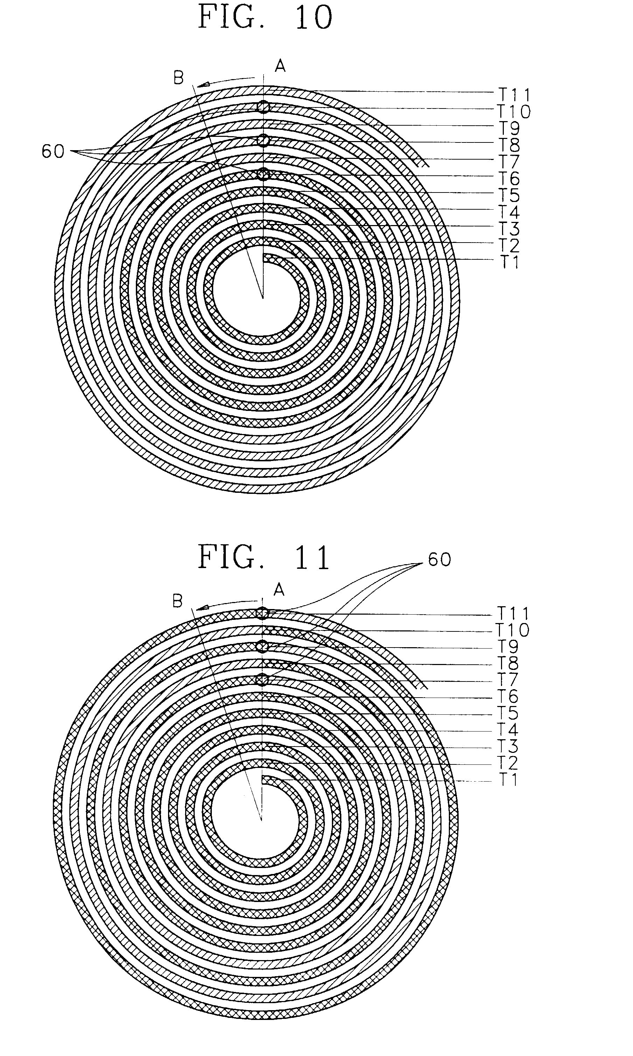

Figures 7 through 11 show a method of scanning multiple tracks of an optical pickup according to another embodiment of the present invention. Here, the same reference numerals indicate the same members.

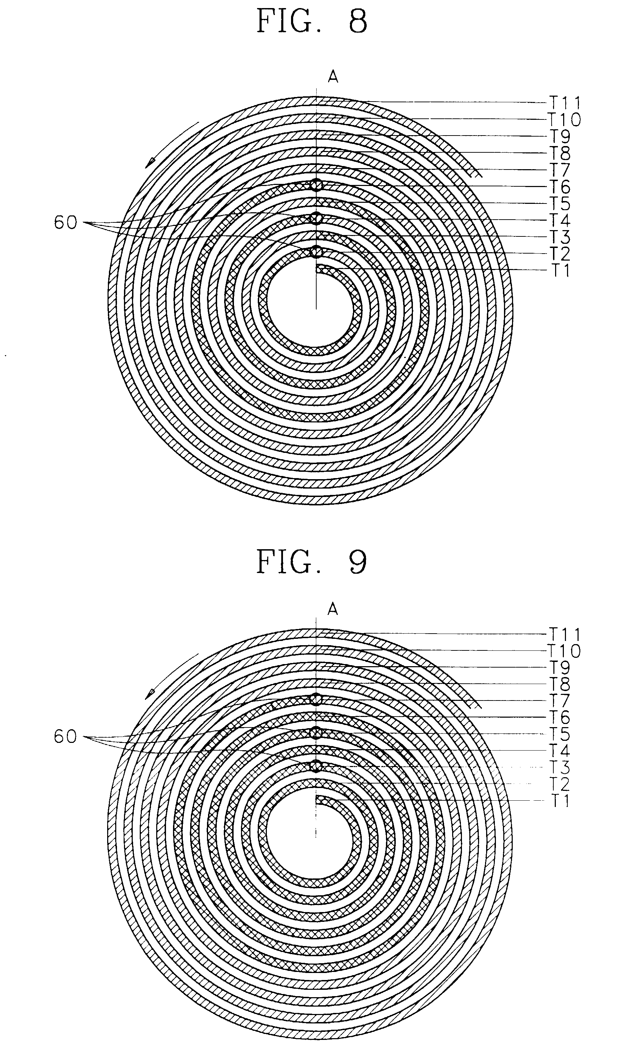

As shown in Figure 7, three light spots 60 initially emitted from a light source (not shown) are formed in series on the first, third and fifth tracks T1, T3 and T5 of a disk along line A. That is, the distance between the light spots is defined as "2" in the present embodiment, which means that the distance between the light spots is two times the distance between the tracks. As the disk rotates in the direction indicated by the arrow, i.e., counterclockwise, making a rotation, the optical pickup scans the first, third and fifth tracks T1, T3 and T5 to reproduce the recorded information. Then, as shown in Figure 8, the light spots 60 are respectively located on the second, the fourth and the sixth tracks T2, T4 and T6. At this time, since there remains an unscanned section on each track, as shown in Figure 9, the disk is further rotated to relocate the light spot 60 on the third, the fifth and the seventh tracks T3, T5 and T7. Accordingly, the first through sixth tracks T1-T6 and a portion of the seventh track T7 are scanned. In this state, the optical pickup jumps three tracks so that the three spots 60 are moved to the sixth, eighth and tenth tracks T6, T8 and T10. Here, the disk rotates further from line A to line B while the track jump of the optical pickup 60 is being made. Thus, a section between the line A and line B on the seventh track T7 remains unscanned. Then, as the disk rotates, tracks are scanned. As shown in Figure 14, the unscanned section of the seventh track T7 is then scanned. The above scanning processes are repeated.

In the above described embodiments, the total track reproducing time $T_t$ with resepct to one reproduction period of the optical pickup is represented as follows.

$$T_t=T_j\{(N_b-1)N_g-1\}+N_dT_c \tag{1}$$

Here, the number of beams is $N_b$; the interval between light beams is $N_g$; the time required for track jump is $T_j$; the time required for a rotation of disk is $T_c$; and the number of disk rotations during the reproduction period is Nd. The "reproduction period" defined in the specification and claims means the time required for reproduction of all tracks on which light beams are formed. That is, in the embodiment shown in Figure 4, the reproduction time corresponds to the time for one rotation of the disk, and the reproduction time corresponds to the time for two rotation of the disk in the embodiment shown in Figure 7.

Also, the time $T_l$ required in reproducing one track is expressed as follows.

$$T_1=T_t/N_r=T_j\{(N_b-1)N_g-1\}/N_r+N_dT_c/N_r$$

$$=T_j(N_bN_g-N_g-1)/N_r+N_dT_c/N_r \tag{2}$$

Here, $N_r$ is the number of reproduced tracks during the reproduction period and the others are the same as those in equation (1).

In the case of employing three beams, the interval between light beams, the number of disk rotation during one reproduction period and the number of reproduced track according to the number of jumped track are shown in table 1.

<Table 1>

| INTERVAL BETWEEN LIGHT BEAMS ($N_g$) | NUMBER OF DISK ROTATION DURING REPRODUCTION PERIOD ($N_d$) | NUMBER OF JUMP TRACK ($N_j$) | NUMBER OF REPRODUCED TRACK ($N_r$) |
|---|---|---|---|
| 1 | 1 | 1 | 2 |
| 2 | 2 | 3 | 5 |
| 3 | 3 | 5 | 8 |
| 4 | 4 | 7 | 11 |
| 5 | 5 | 9 | 14 |

It can be noted that the number of jumped track $N_j$ is $(N_b-1)N_g-1$ and the number of the reproduced tracks during one reproduction period $N_r$ is $N_bN_g-1$.

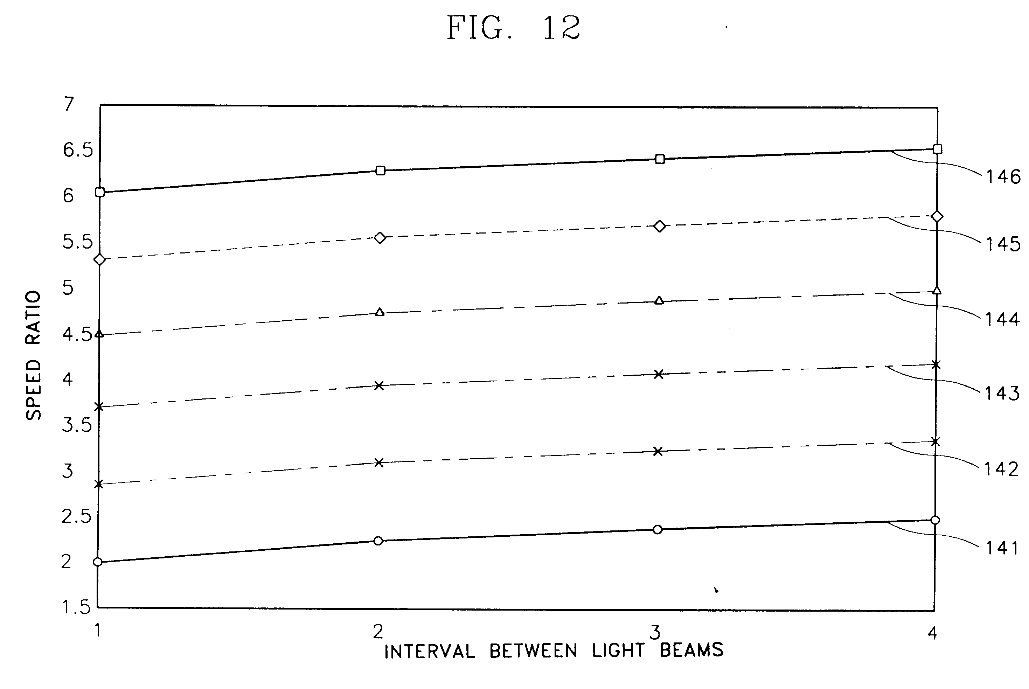

Figure 12 is a graph in which the speed ratio according to the interval between light beams are indicated. Reference numerals 141 through 146 indicate for the respective cases in which 3-beam, 4-beam, 5-beam, 6-beam, 7-beam and 8-beam are employed. Here, the speed ratio of a spindle motor does not change.

As shown in the drawing, in the case of employing 3 beams, the speed ratio improves by about twofold according to the interval between the light beams, and the speed ratio improves to rotate approximately 6 times or more faster when the 8 beams are employed.

As described above, the multiple tracks scanning method of an optical pickup according to the present invention is useful in obtaining the number of beams, the interval between the beams and the number of jump track to achieve the optimal effects in its performance and speed ratio in an optical pickup device utilizing multiple beams.

It is noted that the present invention is not limited to the preferred embodiment described above, and it is apparent that variations and modifications by those skilled in the art can be effected within the scope of the present invention defined in the appended claims.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for scanning multiple tracks using an optical pickup to simultaneously emit a plurality of beams on a plurality of tracks on a disk, wherein said multiple tracks scanning method satisfies the following equations:

$$N_j=(N_b-1)N_g-1$$

and

$$N_r=N_bN_g-1,$$

wherein $N_j$ represents the number of jumped tracks, $N_b$ represents the number of light beams, $N_g$ represents the interval between the light beams, and $N_r$ represents the number of reproduced tracks during a reproduction period.

2. A method for scanning multiple tracks using an optical pickup as claimed in claim 1, wherein said method satisfies the following equation:

$$T_1=T_j(N_bN_g-N_g-1)/N_r+N_dT_c/N_r$$

wherein $T_l$ represents the time required for reproducing one track, $T_j$ represents the time required for a track jump of said optical pickup, $T_c$ represents the time required for one rotation of said disk, and $N_d$ represents the number of disk rotation during said reproduction period.

FIG. 1 (PRIOR ART)

# FIG. 2 (PRIOR ART)

FIG. 3 (PRIOR ART)

EP 0 840 294 A2

# FIG. 4

# FIG. 5

# FIG. 6

# FIG. 7

FIG. 8

FIG. 9

# FIG. 10

# FIG. 11

## FIG. 12

EP 0 840 294 A2